# EUROPÄISCHE PATENTANMELDUNG

(11) **EP 1 053 911 A2**
(43) Veröffentlichungstag der Anmeldung: **22.11.2000**
(21) Anmeldenummer: 00109641.1
(22) Anmeldetag: 05.05.2000
(51) Int. Cl.: B60R 1/06, B60R 1/12

(54) **Beheizbarer Rückspiegel**

(30) Priorität: 18.05.1999 DE 19922778
(71) Anmelder: MEKRA Lang GmbH & Co. KG, 90765 Fürth (DE)
(72) Erfinder: Lang, Heinrich, 91465 Ergersheim (DE); Seiboth, Wolfgang, 91438 Bad Windsheim (DE)
(74) Vertreter: Winter, Brandl, Fürniss, Hübner, Röss, Kaiser, Polte Partnerschaft

(57) **Zusammenfassung**

Beschrieben wird ein beheizbarer Rückspiegel (2), insbesondere für Kraftfahrzeuge, mit wenigstens einer in einem Spiegelgehäuse gehaltenen Spiegelscheibe (8) und wenigstens einem der Spiegelscheibe (8) zugeordneten Heizelement (14, 16) in Form eines Flächenheizelements, welches über einen Thermoschalter (48) aktivierbar ist. Hierbei ist bei aktiviertem Heizelement wenigstens ein Anzeigeelement (40) aktiviert, welches in Draufsichtrichtung auf den Spiegel (2) sichtbar angeordnet ist.

## Beschreibung

Die Erfindung betrifft einen beheizbaren Rückspiegel, nach dem Oberbegriff des Anspruches 1.

Es ist bekannt, Rückspiegel für Kraftfahrzeuge und hier insbesondere Außenrückspiegel beheizbar zu gestalten, so daß Kondensat, Reif, Schnee, Eis oder dergleichen durch Erwärmung der Spiegelscheibe mittels eines Heizelementes entfernt werden können, um über den Spiegel wieder ein ungehindertes Sichtfeld nach hinten zu haben. Die Heizelemente werden hierbei in aller Regel in Form von Flächenheizelementen ausgebildet, welche sich im wesentlichen vollflächig über die Ausdehnung der Spiegelscheibe hinweg in der Regel an deren Rückseite erstrecken. Weiterhin ist es bekannt, in beheizbaren Rückspiegeln das Heizelement über einen Thermoschalter zu aktivieren, d.h. quasi automatisch ab einer bestimmten Außentemperatur schließt der Thermoschaltern den Stromkreislauf zu dem Heizelement, so daß dieses aktiviert wird.

Da somit das Ein- und Ausschalten der Spiegelheizung oder des Heizelementes über den Thermoschalter automatisch erfolgt, hat der Fahrer eines mit einem oder mehreren dieser Spiegel ausgestatten Fahrzeuges Schwierigkeiten, zu erkennen, ob sich die Spiegelheizung bereits selbstätig eingeschaltet hat oder nicht. Oftmals ist es nämlich so, daß die Spiegelscheibe beispielsweise durch Beschlag oder dergleichen "blind" ist, sich der Thermoschalter jedoch (noch) nicht eingeschaltet hat, da beispielsweise die Temperatur hierzu noch nicht niedrig genug ist, oder aber der Thermoschalter hat unmittelbar vor Überprüfung der Spiegelsichtverhältnisse eingeschaltet, es ist aber in der kurzen Zeit seit dem Einschaltmoment noch kein Ergebnis sichtbar, da die Spiegelscheibe noch nicht ausreichend erwärmt werden konnte. In solchen Fällen wird die Spiegelheizung dann zumeist vom Fahrer manuell eingeschaltet, aber diese zusätzliche Manipulation seitens des Fahrers ist oftmals unnötig, nämlich immer dann, wenn sich der Thermoschalter erst unmittelbar vor Überprüfung der Spiegelsichtverhältnisse eingeschaltet hat, aber noch kein Ergebnis sichtbar ist, da die Spiegelscheibe noch nicht ausreichend erwärmt werden konnte. Mit anderen Worten, es wäre wünschenswert für den Fahrer eines Kraftfahrzeugs, welches mit einem oder mehreren beheizbaren Rückspiegeln ausgestattet ist, stets zu wissen, ob sich bei beschlagenem oder "blinden" Spiegel die automatische Spiegelheizung zur Beseitigung dieses Beschlags bereits eingeschaltet hat oder nicht, um notfalls über einen separaten Schalter das Heizelement unter Überbrückung des Thermoschalters einschalten zu können.

Von daher hat es sich die vorliegende Erfindung zur Aufgabe gemacht, eine Möglichkeit zu schaffen, es dem Fahrer mitteilen zu können, daß sich die automatische Spiegelheizung über den Thermoschalter im Betrieb befindet, wobei diese Anzeige so erfolgen soll, daß der Fahrer nicht vom Geschehen im Straßenverkehr abgelenkt wird.

Zur Lösung dieser Aufgabe schlägt die vorliegende Erfindung gemäß Anspruch 1 einen beheizbaren Rückspiegel, insbesondere für Kraftfahrzeuge vor, mit wenigstens einer in einem Spiegelgehäuse gehaltenen Spiegelscheibe und wenigstens einem der Spiegelscheibe zugeordneten Heizelement in Form eines Flächenheizelementes, welches über einen Thermoschalter aktivierbar ist. Dieser bekannte beheizbare Rückspiegel wird erfindungsgemäß weiterhin derart ausgebildet, daß bei aktiviertem Heizelement wenigstens ein Anzeigeelement aktiviert ist, welches in Draufsichtrichtung auf den Spiegel sichtbar angeordnet ist.

Mit einem Blick in den Rückspiegel, den praktisch jeder Fahrer eines Kraftfahrzeuges vor oder unmittelbar nach Beginn der Fahrt macht, um Zustand und Einstellung des Spiegels zu kontrollieren, kann somit der Fahrer verifizieren, ob sich die automatische Spiegelbeheizung oder Spiegelheizung eingeschaltet hat oder nicht: ist das in Draufsichtrichtung auf den Spiegel sichtbare Anzeigeelement aktiviert, bedeutet dies, daß der Thermoschalter das Heizelement eingeschaltet hat und der Spiegel bereits beheizt wird. Im Falle eines (noch) beschlagenen oder "blinden" Spiegels zeigt dies dem Fahrer an, daß er die Spiegelheizung nicht von sich aus manuell beispielsweise am Armaturenbrett des Fahrzeuges aktivieren muß, sondern daß die Spiegelheizung bereits aktiv ist und innerhalb kurzer Zeit ein ungehindertes Sichtfeld nach hinten über den dann klaren Spiegel zur Verfügung steht. Erkennt andererseits der Fahrer, daß der Spiegel zwar beschlagen oder sonstwie "blind" ist, jedoch die Spiegelheizung (noch) nicht aktiviert ist (da das Anzeigeelement ebenfalls nicht aktiviert ist), kann er die Spiegelheizung gezielt über eine entsprechende Schalterbetätigung von sich aus aktivieren.

Da das Anzeigeelement in Draufsichtrichtung auf den Spiegel sichtbar angeordnet ist, muß der Fahrer nicht irgendwelche Anzeigelampen oder dergleichen im Armaturenbrett überwachen, sondern kann mit einem kurzen Seitenblick, ohne hierbei den Kopf bewegen zu müssen, sowohl den Zustand des Spiegels (Ausrichtung und Bildqualität) als auch den Einoder Ausschaltzustand der Spiegelheizung verifizieren. Ablenkungen vom Verkehrsgeschehen sind hierdurch so gut wie ausgeschlossen.

Vorteilhafte Weiterbildungen der Erfindung sind Gegenstand der Unteransprüche.

Bevorzugt emittiert das Anzeigeelement Licht im sichtbaren Bereich, wobei das Anzeigeelement in Form einer lichtemittierenden Diode (LED) ausgebildet ist. LEDs stehen in unterschiedlichen Farben, Formen und Emissionsintensitäten zur Verfügung, überstehen unbeschadet Ein/Aus-Vorgänge im Bereich von mehreren Einhunderttausend Schaltzyklen, sind unempfindlich gegenüber Vibrationen, benötigen keine hohen Anschlußwerte und lassen sich leicht einbauen.

Hierbei kann das Anzeigeelement beispielsweise hinter der Spiegelscheibe angeordnet sein und durch die Spiegelscheibe emittieren. Das Anzeigeelement oder die LED liegt somit hinter der Spiegelscheibe und emittiert durch die Spiegelschicht hindurch nach außen. Aufgrund des Lichtdurchtritts durch die Spiegelschicht von hinten her ergibt sich eine gewisse Abschwächung des von der Spiegeloberfläche abgegebenen Lichtes, so daß bevorzugt an der Stelle der Anordnung des Anzeigeelementes die Spiegelschicht zumindest teilweise in Strich- oder Punktform entfernt werden sollte, um einen höheren Lichtdurchtritt zu ermöglichen. Auch muß an dieser Stelle der Anordnung des Anzeigeelementes das Heizelement, wenn dieses als Flächenheizelement ausgebildet ist, in Form einer runden oder eckigen Aussparung ausgespart werden. Der Vorteil der Anordnung des Anzeigeelementes hinter der Spiegelscheibe ist insbesondere darin zu sehen, daß das Anzeigeelement allseitig von Spiegelgehäuse und Spiegelscheibe umschlossen und somit geschützt ist. Weiterhin liegt dann das Anzeigeelement direkt im Blickfeld des Fahrers.

Als Alternative zur Anordnung hinter der Spiegelscheibe kann das Anzeigeelement auch neben der Spiegelscheibe in einem dortigen, zwischen Spiegelscheibe und Spiegelgehäuse ausgebildeten Randbereich angeordnet werden. Dies hat insbesondere den Vorteil, daß bei massiv beschlagener Spiegelscheibe (dicker Reif) das Anzeigeelement besser sichtbar ist, als wenn es hinter der Spiegelscheibe und von dem Beschlag bedeckt angeordnet wäre.

Bevorzugt sind das Anzeigeelement und der Thermoschalter zu einer Baueinheit zusammengefaßt und können somit rasch als eine Einheit montiert werden, wobei insbesondere der Verdrahtungsaufwand verringert wird.

Genauso gut können das Anzeigeelement und der Thermoschalter als getrennte Bauelemente vorliegen und dann erst zu einer Baugruppe zusammengefügt werden, wobei dieser Zusammenfügvorgang besonders bevorzugt durch einen Steckvorgang erfolgt.

Die Helligkeit des Anzeigeelementes kann bevorzugt einstellbar sein, um einerseits sicherzustellen, daß die Anzeige bei heller Umgebung, d.h. bei Tag hinreichend hell ist, bei dunkler Umgebung, also bei Nacht jedoch nicht so hell ist, daß der Fahrer eventuell geblendet werden könnte.

Hierbei kann die Helligkeit automatisch abhängig von der Umgebungslichtintensität einstellbar sein, beispielsweise über einen Fotosensor.

Das Anzeigeelement kann gemäß der grundsätzlichen Idee oder Ausführungsform der vorliegenden Erfindung die Anzeige *per se* für die Spiegelheizung sein. Genauso gut kann jedoch das Anzeigeelement ein entsprechendes Symbol von hinten her beleuchten, welches dann dem Fahrer praktisch unmißverständlich klar macht, daß die Spiegelheizung aktiviert ist. Dieses Symbol kann beispielsweise auf die Spiegelflächenaußenseite aufgeklebt sein, oder aber es kann in die Spiegelflächenaußenseite eingeritzt oder eingeätzt sein.

Weitere Einzelheiten, Aspekte und Vorteile der vorliegenden Erfindung ergeben sich aus der nachfolgend als rein illustrativ und nicht einschränkend zu verstehenden Beschreibung einer Ausführungsform anhand der Zeichnung.

Es zeigt:
Fig. 1 eine Schnitt-Teildarstellung durch einen erfindungsgemäßen beheizbaren Rückspiegel; und
Fig. 2 ein schematisches Schaltkreisdiagramm der elektrischen Komponenten des beheizbaren Rückspiegels.

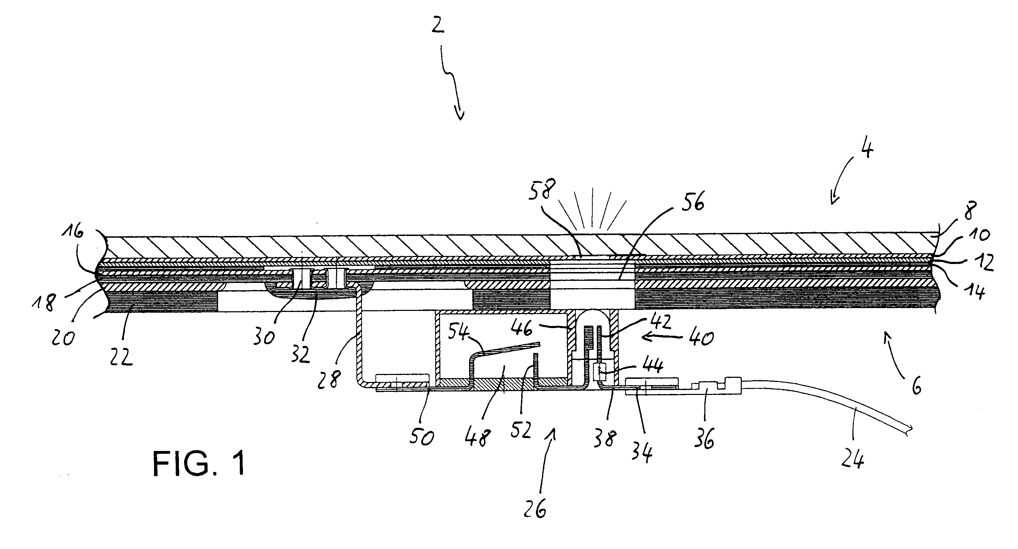

Ein in Fig. 1 insgesamt mit dem Bezugszeichen 2 versehener Rückspiegel weist von einer Spiegelaußen- oder Vorderseite 4 zu einer Spiegelinnen- oder Rückseite 6 hin gesehen einen mehrschichtigen Aufbau auf, nämlich ein Spiegelglas 8, einen Spiegelbelag 10, eine doppelseitige Klebefolie 12, eine Halbleiterpaste 14, eine Silberleitpaste 16, eine Polyesterfolie 18, einen Kleber 20 und eine Glasträgerplatte 22.

Der Aufbau des Rückspiegels 2 mit den Schichten 8 bis 22 bildet in bekannter Weise einen beheizbaren Rückspiegel mit einem als Flächenheizelement ausgebildeten Heizelement, welches im wesentlichen durch die Halbleiterpaste 14 und die Silberleitpaste 16 gebildet wird.

Der zur Erzielung eines Stromflusses und damit einer Heizwirkung notwendige elektrische Anschluß erfolgt über ein Kabel 24, welches eine weiter unten noch zu beschreibende Baugruppe 26 kontaktiert, wobei von der Baugruppe 26 ein fester Anschluß 28 zu dem Heizelement, welches im wesentlichen aus der Halbleiterpaste 14 und der Silberleitpaste 16 besteht, führt. Die Kontaktierung des Anschlußes 28 mit dem Heizelement erfolgt beispielsweise über eine oder mehrere Nieten 30, wobei der Anschlußbereich in ein isolierendes Material 32 eingebettet ist. Der zweite Anschluß zum Aufbau eines geschlossenen Stromkreislaufs steht ebenfalls mit dem Heizelement in Verbindung, ist jedoch in Fig. 1 nicht näher dargestellt.

Die Baugruppe 26 weist an einem Ende oder einer Seite eine Kontaktzunge 34 auf, auf welche ein Stecker 36 seitens des Kabels 24 steckbar ist. Von der Kontaktzunge 34 führt ein Anschluß 38 zu einem Anzeigeelement 40, welches im dargestellten Ausführungsbeispiel eine lichtemittierende Diode (LED) 42 mit eingebautem Vorwiderstand 44 ist. Die LED 42 ist in einem Träger 46 gehalten, der an der Unterseite der Trägerplatte 22 befestigt ist, beispielsweise mit dieser verklebt oder an dieser einstöckig ausgebildet ist, wobei dieser Träger 46 weiterhin noch einen Thermoschalter 48 trägt. Ein von dem Thermoschalter 48 abgehender Anschluß 50 steht dann mit dem Anschluß 28 in Verbindung, der zu dem Heizelement führt.

Der Thermoschalter 48 weist einen festen Kontakt 52 und einen beweglichen Kontakt 54 auf, der beispielsweise aus einem Bimetallstreifen gebildet ist und sich abhängig von der Umgebungstemperatur entweder an den festen Kontakt 52 anlegt und den Stromkreis schließt, oder aber von diesem abhebt, um den Stromkreis zu unterbrechen. Bei geschlossenem Stromkreis ist das Heizelement aktiviert und bei unterbrochenem Stromkreis ist es abgeschaltet.

An der Stelle, wo das Anzeigeelement 40 bzw. die LED 42 angeordnet ist, sind die einzelnen Schichten 10 bis 22 beispielsweise kreisrund durchbrochen und bilden eine Ausnehmung 56. Weiterhin ist der Spiegelbelag 10 beispielsweise kreisrund durchbrochen und bildet eine Öffnung oder einen Durchbruch 58, der entweder gemäß Fig. 1 koaxial zu der Ausnehmung 56 liegt, aber kleineren Durchmesser hat, oder aber genau so groß wie die Ausnehmung 56 ist. Von der LED 42 emittiertes oder abgestrahltes Licht kann somit durch die Ausnehmung 56 und den Durchbruch 58 und schließlich durch das Spiegelglas 8 nach außen hin austreten.

Anstelle des Durchbruchs 58 kann hier auch ein Symbol oder Piktogramm angeordnet sein, welches dann von der LED 42 von hinten her beleuchtet wird und von der Außenseite 4 des Rückspiegels 2 her sichtbar ist. Ein derartiges Symbol oder Piktogramm kann auch auf die Spiegelaußenfläche aufgeklebt oder hierin eingeritzt oder eingeätzt sein, so daß es gleichermaßen von der LED 42 von hinten her beleuchtet wird.

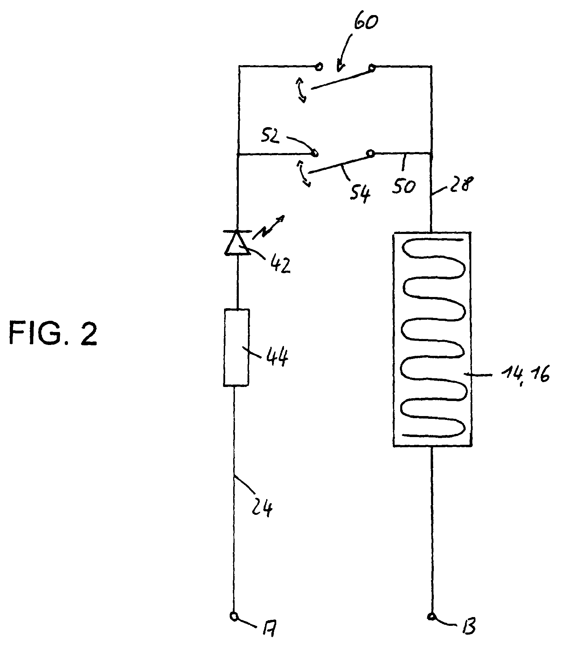

Das elektrische Schaltbild des in Fig. 1 gezeigten Aufbaus ist nochmals in Fig. 2 dargestellt. Der Stromkreis verläuft von einem Anschluß A über das Kabel 24, den Vorwiderstand 44, die LED 42, die festen und beweglichen Kontakte 52 und 54 des Thermoschalters 48, sowie über die Anschlüsse 50 und 28 zu dem Heizelement bestehend aus der Halbleiterpaste 14 und der Silberleitpaste 16 und von dort aus zu einem in Fig. 1 nicht näher gezeigten Anschluß B. Die Anschlüsse A und B sind mit der Bordnetzspannung des Kraftfahrzeugs verbunden. Zusätzlich zu dem Thermoschalter 48 ist noch ein weiterer Schalter 60 vorgesehen, mit welchem der Thermoschalter 48 überbrückt werden kann. Mit anderen Worten, auch bei geöffnetem Thermoschalter 48 kann über den Schalter 60 der Stromkreis zwischen den Anschlüssen A und B durch die LED 42 und das Heizelement geschlossen werden. Der zusätzliche Schalter 60 befindet sich beispielsweise im Armaturenbrett des Kraftfahrzeugs und ist von dessen Fahrer von Hand betätigbar.

Weiterhin kann noch eine Vorrichtung vorgesehen sein, mit welcher die Intensität des von der LED 42 oder einem anderen Anzeigeelement abgegebenen Lichts einstellbar ist. Die Einstellung erfolgt hierbei gemäß einer bevorzugten Ausgestaltungsform automatisch über einen entsprechenden Sensor, beispielsweise eine Fotozelle oder dergleichen, welche abhängig von der Intensität des herrschenden Umgebungslichts die Intensität der LED 42 bzw. des Anzeigeelementes 40 entsprechend regelt: je heller das Umgebungslicht, um so heller wird das Anzeigeelement 40 gesteuert und je dunkler die Umgebung ist, umso schwächer wird das Anzeigeelement 40 in seiner Lichtausstrahlung gemacht. Ausreichende Sichtbarkeit einerseits, jedoch die Vermeidung von Blendung andererseits ist hierdurch sichergestellt.

Die Baugruppe 26 kann entweder als vorgefertigte, beispielsweise auf einer Platine montierte Einheit ausgebildet sein, welche mittels des Trägers 46 an der Rückseite der Trägerplatte 22 befestigt wird. Anstelle hiervon können die einzelnen Komponenten der Baugruppe 26, also der Vorwiderstand 44, das Anzeigeelement 42 und der Thermoschalter 48 zunächst separate Bauteile sein, welche dann zu der Baugruppe 26 zusammengefügt, beispielsweise zusammengesteckt werden.

Der bewegliche Kontakt 54 des Thermoschalters 48 schließt den Stromkreislauf ab einer bestimmten Umgebungstemperatur, so daß sich die Spiegelheizung selbstätig einschaltet und das Spiegelglas 8 von hinten her im wesentlichen vollflächig beheizt wird, so daß ein Beschlag, Reif oder dergleichen auf der Spiegelglasaußenfläche durch die Erwärmung des Spiegelglases 8 entfernt wird. Gleichzeitig ist hierbei die aktivierte Anzeige oder LED 42 durch die Ausnehmung 56 und den Durchbruch 58 sichtbar. Der Fahrer eines Fahrzeuges kennt somit auf einen Blick in den Rückspiegel, ob dessen Heizung sich selbstätig eingeschaltet hat oder nicht. Ist aus irgendwelchen Gründen das Spiegelglas 8 beschlagen, mit Reif bedeckt oder sonstwie "blind", und es leuchtet die LED 42 nicht, d.h., der Thermoschalter 48 hat den Stromkreislauf nicht automatisch geschlossen, kann der Fahrer durch Schließen des Schalters 60 von Hand den offenen Thermoschalter 48 überbrücken und somit die Spiegelheizung einschalten, um freie Sicht zu bekommen.

Ist in dem Durchbruch 58 oder gegenüber dem Durchbruch 58 auf der Spiegelflächenaußenseite ein Symbol oder Piktogramm angeordnet, beispielsweise eine Mehrzahl von übereinanderliegenden Wellenlinien, kann dem Fahrer unmißverständlich angezeigt werden, daß die Spiegelheizung in Betrieb ist.

Anstelle der Anordnung der Baugruppe 26 bzw. der dortigen LED 42 oder eines anderen optischen Anzeigeelementes, welches Licht im bevorzugt sichtbaren Bereich emittiert, kann zumindest das Anzeigeelement 40, beispielsweise ebenfalls in Form einer LED, neben der Spiegelscheibe oder dem Spiegelglas 8 in einem dortigen, zwischen Spiegelglas 8 und Spiegelgehäuse ausgebildeten Randbereich angeordnet werden. Damit befindet sich das Anzeigeelement 40 oder die LED 42 nach wie vor im unmittelbaren Blickbereich des Fahrers, liegt jedoch nicht mehr hinter dem Spiegelglas 8, was unter Umständen den Vorteil hat, daß bei einem besonders stark beschlagenen Spiegel, mit einer dicken Reifschicht bedeckten Spiegelglasfläche, etc., wodurch das Anzeigeelement 40 selbst im Betrieb nicht ohne weiteres erkennbar wäre, dann die außerhalb der Fläche des Spiegelglases 8 liegende LED 42 besser sichtbar ist.

Durch den Gegenstand der vorliegenden Erfindung wird es möglich, den automatischen Ein- und Ausschaltvorgang einer Heizung oder eines Heizelementes für einen beheizbaren Rückspiegel für den Fahrer sichtbar zu machen, ohne daß dieser irgendwelche möglicherweise ungünstig außerhalb des unmittelbaren Blickfeldes angebrachten und einem Schalter zugeordneten Anzeigeelemente in dem Instrumentenbrett überwachen muß. Bei Bedarf kann, falls dies dem Fahrer angezeigt wird, die nicht aktivierte Spiegelheizung über einen zusätzlichen Schalter eingeschaltet werden, um stets eine freie Spiegelfläche und damit ungehindertes Gesichtsfeld zu haben.

## Patentansprüche

1. Beheizbarer Rückspiegel, insbesondere für Kraftfahrzeuge, mit wenigstens einer in einem Spiegelgehäuse gehaltenen Spiegelscheibe (8) und wenigstens einem der Spiegelscheibe zugeordneten Heizelement in Form eines Flächenheizelements (14, 16), welches über einen Thermoschalter (48) aktivierbar ist, dadurch gekennzeichnet, daß
bei aktiviertem Heizelement wenigstens ein Anzeigeelement (40) aktiviert ist, welches in Draufsichtrichtung auf den Spiegel (2) sichtbar angeordnet ist.

2. Rückspiegel nach Anspruch 1, dadurch gekennzeichnet, daß das Anzeigeelement (40) Licht im sichtbaren Bereich emittiert.

3. Rückspiegel nach Anspruch 2, dadurch gekennzeichnet, daß das Anzeigeelement (40) eine lichtemittierende Diode (LED) (42) ist.

4. Rückspiegel nach einem der Ansprüche 1 bis 3, dadurch gekennzeichnet, daß das Anzeigeelement (40) hinter der Spiegelscheibe (8) angeordnet ist und durch die Spiegelscheibe (8) emittiert.

5. Rückspiegel nach einem der Ansprüche 1 bis 3, dadurch gekennzeichnet, daß das Anzeigeelement (40) neben der Spiegelscheibe (8) in einem dortigen, zwischen Spiegelscheibe (8) und Spiegelgehäuse ausgebildeten Randbereich angeordnet ist.

6. Rückspiegel nach einem der Ansprüche 1 bis 5, dadurch gekennzeichnet, daß das Anzeigeelement (40) und der Thermoschalter (48) zu einer Baueinheit (26) zusammengefaßt sind.

7. Rückspiegel nach einem der Ansprüche 1 bis 5, dadurch gekennzeichnet, daß das Anzeigeelement (40) und der Thermoschalter (48) als getrennte Bauelemente zu einer Baugruppe zusammenfügbar, insbesondere zusammensteckbar sind.

8. Rückspiegel nach einem der Ansprüche 2 bis 7, dadurch gekennzeichnet, daß die Helligkeit des Anzeigeelements (40) einstellbar ist.

9. Rückspiegel nach Anspruch 8, dadurch gekennzeichnet, daß die Helligkeit automatisch abhängig von der Umgebungslichtintensität einstellbar ist.

10. Rückspiegel nach Anspruch 4 und einem der Ansprüche 6 bis 9, dadurch gekennzeichnet, daß das Anzeigeelement (40) ein Symbol von hinten her beleuchtet.

11. Rückspiegel nach Anspruch 10, dadurch gekennzeichnet, daß das Symbol auf die Spiegelflächenaußenseite aufgeklebt ist.

12. Rückspiegel nach Anspruch 10, dadurch gekennzeichnet, daß das Symbol in die Spiegelflächenaußenseite eingeritzt oder -geätzt ist.
